# EUROPÄISCHE PATENTSCHRIFT

(11) **EP 2 182 257 B1**
(45) Veröffentlichungstag und Bekanntmachung des Hinweises auf die Patenterteilung: **14.12.2011**
(21) Anmeldenummer: 09013654.0
(22) Anmeldetag: 30.10.2009
(51) Int. Cl.: F16J 15/16, F16J 15/32

(54) **Dichtungsanordnung zwischen einer Welle und einem Gehäuseteil**
Seal assembly between a shaft and a housing section
Dispositif d'étanchéité entre un arbre et un élément de boîtier

(30) Priorität: 30.10.2008 DE 102008054045
(43) Veröffentlichungstag der Anmeldung: 05.05.2010
(73) Patentinhaber: Lenze Drives GmbH, 32699 Extertal (DE)
(72) Erfinder: Hütte, Jürgen, 32683 Barntrup (DE)
(74) Vertreter: Schober, Mirko

(56) Entgegenhaltungen:
- EP-A- 0 012 133
- EP-A- 1 122 472
- DE-A1-102006 054 743
- DE-T2- 69 018 807

## Beschreibung

Die Erfindung bezieht sich auf eine Dichtungsanordnung gemäß den Merkmalen des Oberbegriffs des Patentanspruchs 1.

Eine solche Dichtungsanordnung ist aus dem Dokument EP 1 122 472 B1 bekannt. Das vornehmliche Einsatzgebiet solcher Dichtungsanordnungen findet sich bei Getriebemotoren, deren Getriebeinnenraum den geschlossenen Innenraum darstellt, in welchem sich als kriech- oder fließfähiges Medium ein Schmieröl oder -fett befindet. Der Luftraum mit Verbindung zur atmosphärischen Außenluft ist der Motorinnenraum, der von dem in dem Getriebeinnenraum befindlichen Medium freizuhalten ist.

Dichtungsanordnungen dieser Art sind verschleißarm, da bei den üblichen hohen Betriebsdrehzahlen der Welle die Dichtung zwischen dem Innenraum und dem Luftraum allein durch die Fliehkraft im Ringspalt zwischen dem Dichtring und dem mit dem Gehäuseteil festen Gegenring bewirkt wird. Hierbei ist das elastische Dichtungsteil am mit der Welle mit rotierenden Dichtring von dem mit dem Gehäuseteil festen Kragen abgehoben, so dass keine verschleißende Reibung zwischen dem Dichtungsteil und dem Kragen auftritt. In diesem Betriebszustand besteht eine durchgehende Verbindung zwischen dem unter atmosphärischer Außenluft stehenden Luftraum und dem abgeschlossenen Innenraum über den ringförmigen Spalt entlang der Welle zu der dieser benachbarten Ringkammer radial unterhalb dem Dichtungsteil, des weiteren an diesem Dichtungsteil vorbei in den radial darüberlegenden Ringraum und den daran anschließenden Ringspalt. Hierdurch besteht das Problem, dass über den beschriebenen weg Außenluft von dem Luftraum in den geschlossenen Innenraum aufgrund der Fliehkrafteinwirkung gepumpt wird. Es gelangt dadurch ein beachtlicher Teil an Außenluft in den geschlossenen Innenraum, wie den Getriebeinnenraum eines Getriebemotors. Aufgrund der Turbulenzen in diesem Innenraum findet eine innige Kontaktierung der Luft mit dem jeweiligen Schmiermittel statt, womit eine vorzeitige Alterung des Schmiermittels aufgrund von Oxidation verbunden ist. Man kann dem dadurch zum Teil abhelfen, dass man den Innenraum mittels einer Entlüftungsvorrichtung entlüftet. Hierdurch gelangt jedoch ein Öl-Fett-Luftgemisch ins Freie, was wiederum nachteilige Wirkungen mit sich bringt.

Der Erfindung liegt die Aufgabe zugrunde, eine Dichtungsanordnung der eingangs genannten Art zu schaffen, bei der das Aufpumpen des geschlossenen Innenraums mit Außenluft erheblich reduziert werden kann.

Diese Aufgabe wird mit der Gesamtheit der Merkmale des Patentanspruchs 1 gelöst.

Für die Erfindung ist wesentlich, dass über das zumindest eine Druckausgleichsventil im Dichtring die Druckdifferenz zwischen dem geschlossenen Innenraum und dem Ringraum radial oberhalb des Dichtungsteils gering gehalten werden kann, wenngleich sich hierdurch ein Kreislauf des sich im geschlossenen Innenraum bildenden Aerosols über das Druckausgleichsventil und den Ringspalt ausbildet, wodurch die von der Fliehkraftwirkung bedingte Abdichtung nicht beeinträchtigt wird.

Eine vorteilhafte Ausgestaltung der Erfindung ergibt sich aus dem Unteranspruch.

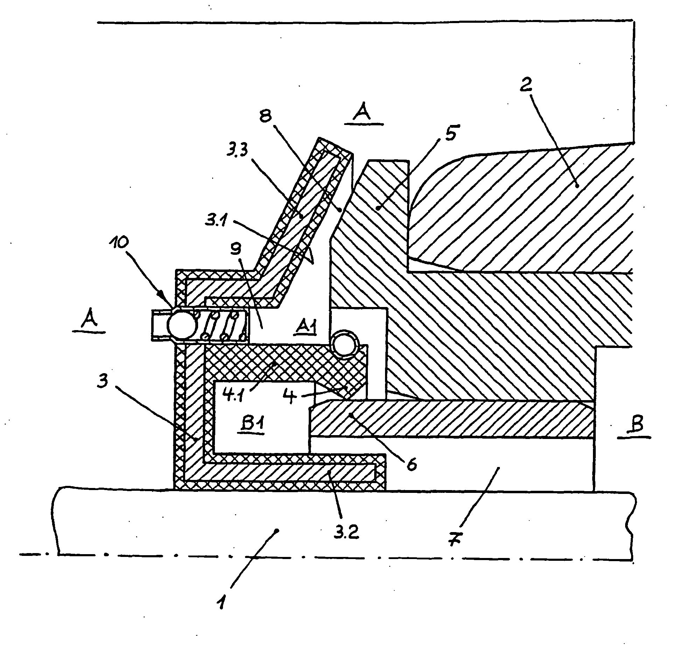

Die Erfindung wird nachfolgend anhand der Zeichnung an einem Ausführungsbeispiel noch näher erläutert.

Die Zeichnung zeigt einen halbseitigen axialen Schnitt durch eine Dichtungsanordnung im Bereich einer Wellendurchführung.

Im Einzelnen erkennt man in der Zeichnung eine Welle 1, die durch ein Gehäuseteil 2 hindurchgeführt ist. Im Bereich der Wellendurchführung befindet sich eine Wellen-Dichtungsanordnung, welche einen in der Zeichnung linken Innenraum A gegenüber einem in der Zeichnung rechten Luftraum B abdichtet. Der Innenraum A ist ein geschlossener Raum, wie er insbesondere durch den Innenraum des Getriebegehäuses eines Getriebemotors verkörpert wird. In dem Innenraum A befindet sich ein kriech- oder fließfähiges Medium, wie ein Schmieröl oder -fett, dessen Übertritt in den Luftraum B sowohl bei stehender als auch bei drehender Welle 1 unterbunden ist. Der Luftraum B ist in der praktischen Ausführung der Motorinnenraum des Getriebemotors, der mit unter atmosphärischem Druck stehender Außenluft belüftet ist. In axialer Richtung der Welle 1 gesehen, liegen der geschlossene Innenraum A und der Luftraum B hintereinander.

Die Dichtungsanordnung umfasst einen Dichtring 3 mit einem Nabenteil 3.2, welches fest auf der Welle 1 angeordnet ist. In radialem Abstand vom Nabenteil 3.2 ist in Richtung zum Gehäuseteil 2 vorstehend ein Dichtungsteil 4 am Dichtring 3 angeordnet, welches einschließlich einem in der Ruhelage zylindrischen an den Dichtring 3 anschließenden Wandungsteil 4.1 elastisch ausgebildet ist. Das Dichtungsteil 4 mit seinem Wandungsteil 4.1 teilt einen Ringraum A1 von einer Ringkammer B1 ab, wobei letztere zur Welle 1 hin angeordnet ist. Ein bis in die Ringkammer B1 hineinreichender Kragen 6, der sowohl mit der Welle 1 als auch mit dem Dichtungsteil 4 koaxial ist, untergreift das Dichtungsteil 4, welches bei stehender oder langsam drehender Welle 1 auf der radialen Außenseite des Kragens 6 aufliegt. Der Kragen 6 ist Teil des feststehenden Gehäuseteils 2, er kann an einen Gegenring 5 angesetzt sein, der fest mit dem Gehäuseteil 2 verbunden ist. Von der Ringkammer B1 erstreckt sich entlang der radialen Innenseite des Kragens 6, die einen Abstand von der Welle 1 hat, ein im Querschnitt ringförmiger Spalt 7 bis zu dem Luftraum B hin.

An den Ringraum A1 schließt ein von der Welle 1 weggerichteter Ringspalt 8 an, der in den geschlossenen Innenraum A mündet. Es handelt sich um einen parallel begrenzten, schmalen Ringspalt 8, der sich zwischen dem feststehenden Gegenring 5 und der Innenseite 3.1 eines Endabschnitts 3.3 des Dichtrings 3 erstreckt. Dieser Endabschnitt 3.3 des mit der Welle 1 mit drehenden Dichtrings 3 wirkt als Schleuderscheibe, die entsprechend bei hoher Drehzahl der Welle 1 das im Ringspalt 8 befindliche Medium, insbesondere Luft und eingedrungene Schmiermittelanteile in den geschlossenen Innenraum A befördert und hierdurch einen Unterdruck in dem Ringraum A1 an der radialen Außenseite des Dichtungsteils 4 bewirkt.

Bei diesen hohen Drehzahlen hebt das Dichtungsteil 4 ebenfalls aufgrund der Fliehkrafteinwirkung von der radialen Außenseite des mit dem Gehäuseteil 2 festen Kragens 6 ab. Dadurch besteht eine Verbindung zwischen dem radial äußeren Ringraum A1 und der radial inneren Ringkammer B1, die über den ringförmigen Spalt 7 bis hin zu dem Luftraum B weiterreicht. Die Folge ist, dass über diesen Verbindungsweg vom Luftraum B weitere atmosphärische Außenluft in den geschlossenen Innenraum A transportiert wird, und zwar unter einer Pumpwirkung, aufgrund deren sich im geschlossenen Innenraum A ein Überdruck gegenüber dem Druck im Ringraum A1 einstellt.

Dieser Überdruck wird auf ein solches Maß begrenzt, das zum einen die schädlichen Einwirkungen der Außenluft auf das im Innenraum A befindliche Medium, nämlich das Schmiermittel, erheblich vermindert und zum zweiten die durch die Fliehkrafteinwirkung bedingte, dynamische Abdichtung nicht beeinträchtigt. Dazu ist in den Dichtring 3 ein Kanal 9 eingeformt, der den Ringraum A1 mit dem geschlossenen Raum A verbindet. Der Durchlass durch diesen Kanal 9 wird mittels eines Druckausgleichsventils 10 gesteuert, welches in dem Kanal 9 angeordnet ist. So wird von dem aerosolen Medium im geschlossenen Innenraum A ein Anteil über das Druckausgleichsventil 10 in den Ringraum A1 eingeleitet und über den Ringspalt 8 in den Innenraum A zurückgeleitet. Auf diese Weise stellt sich in dem Ringraum A1 ein solcher Druck ein, der einen Nachschub von Außenluft über den bei hohen Drehzahlen der Welle 1 offenen Verbindungsweg zum Luftraum B verhindert. Zwar wird hierbei ein Überdruck im geschlossenen Innenraum A aufrechterhalten, das Druckausgleichsventil 10 andererseits wird jedoch so eingestellt, dass sich zwischen dem radial äußeren Ringraum A1 und der radial inneren Ringkammer B1 ein Druckgleichgewicht einstellt, welches zum zweiten dafür sorgt, dass das über den Ringspalt 8 in den Innenraum A zurückbeförderte Luft-Schmiermittelgemisch nicht in den mit der Außenluft verbundenen Luftraum B vordringt.

## Patentansprüche

1. Dichtungsanordnung zwischen einer Welle (1) und einem umgebenden, feststehenden Gehäuseteil (2), bestehend aus einer Welle, einem Gehäuseteil und einem Dichtring, wobei das Gehäuseteil (2) einen geschlossenen Innenraum (A), in welchem sich ein kriech- oder fließfähiges Medium befindet, von einem in Achsrichtung der Welle (1) an den Innenraum (A) anschließenden Luftraum (B) mit Verbindung zur atmosphärischen Außenluft trennt, der gegen einen Übertritt des Mediums im Innenraum (A) abgedichtet ist, wobei auf der Welle (1) der Dichtring (3) mit einem sich unter der Fliehkraft bei rotierender Welle (1) radial aufweitenden, elastischen Dichtungsteil (4) drehfest sitzt, welches in einen Ringraum (A1) ausweicht und diesen von einer Ringkammer (B1) abteilt und welches von einem mit ihm koaxialen Kragen (6), der am Gehäuseteil (2) fest angeordnet ist, untergriffen ist und daran bei Wellenstillstand sowie geringen Drehzahlen anliegt, wobei ferner in Richtung von der Welle (1) weg an den Ringraum (A1) ein Ringspalt (8) zwischen dem Dichtring (3) und einem mit dem Gehäuseteil (2) festen Gegenring (5) anschließt, der in den Innenraum (A) mündet, und die Ringkammer (B2) über einen Ringspalt (7) entlang der Welle (1) mit dem Luftraum (B) in Verbindung steht,
**dadurch gekennzeichnet,**
**dass** der Dichtring (3) zumindest einen ihn durchquerenden Kanal (9) aufweist, welcher den Innenraum (A) mit dem Ringraum (A1) verbindet und in welchem sich ein Druckausgleichsventil (10) befindet, das bei einem vorbestimmten Überdruck im Innenraum (A) bezogen auf den Druck in dem Ringraum (A1) öffnet.

2. Dichtungsanordnung nach Anspruch 1,
**dadurch gekennzeichnet,**
**dass** das Druckausgleichsventil (10) ein zum Ringraum (A1) hin öffnendes Rückschlagventil ist.

## Claims

1. Seal assembly between a shaft (1) and a surrounding stationary housing part (2), consisting of a shaft, a housing part and a sealing ring, wherein the housing part (2) separates a closed inner chamber (A), in which a medium which can move slowly or flow is located, from an air chamber (B) connecting in axial direction of the shaft (1) to the inner chamber (A) with a connection to the atmospheric outside air, which is sealed against crossing of the medium to the inner space (A), wherein on the shaft (1) the sealing ring (3) is located in a rotationally secure manner with an elastic sealing part (4) widening radially under centrifugal force with the rotating shaft (1), which elastic sealing part (4) goes into an annular chamber (A1) and separates this from an annular chamber (B1) and which is engaged from below by a collar (6) coaxial therewith which is arranged fixedly on the housing part (2), and lies upon standstill of the shaft and at low speeds against it, wherein further in the direction away from the shaft (1) an annular gap (8) connects to the annular chamber (A1) between the sealing ring (3) and a counter ring (5) fixed with the housing part (2), which counter ring (5) runs into the inner chamber (A), and the annular chamber (B2) is connected via an annular gap (7) along the shaft (1) with the air chamber (B),
**characterised in that**
the sealing ring (3) comprises at least one channel (9) crossing it which connects the inner chamber (A) with the annular chamber (A1) and in which there is a pressure compensating valve (10), which opens with a predetermined overpressure in the inner chamber (A) in relation to the pressure in the annular chamber (A1).

2. Seal assembly according to claim 1,
**characterised in that**
the pressure compensating valve (10) is a non-return valve opening towards the annular chamber (A1).

## Revendications

1. Système d'étanchéité entre un arbre (1) et un élément de logement (2) fixe, l'entourant, qui consiste en un arbre (1), un élément de logement (2) et un joint d'étanchéité, sachant que l'élément de logement (2) sépare une chambre (A), qui contient un agent visqueux ou fluide, d'une chambre d'air (B) contigüe, dans la direction axiale de l'arbre (1), à la chambre (A), avec raccord à l'air extérieur atmosphérique, qui doit être protégée contre la pénétration du fluide, sachant que le joint d'étanchéité (3) est placé, solidaire en rotation, sur l'arbre (1), avec une lèvre d'étanchéité élastique (4), qui s'évase radialement, sous l'effet de la force centrifuge, lorsque l'arbre (1) tourne, dévie dans un espace annulaire (A1) et sépare celui-ci d'un espace annulaire (B1), et est soutenue par un col (6) coaxial, qui est agencé fixement sur le l'élément de logement (2), et contre lequel il porte quand l'arbre est arrêté ou qu'il ne tourne qu'à faible vitesse, sachant, de plus, que dans la direction s'écartant de l'arbre (1), un interstice annulaire (8) se raccorde à l'espace annulaire (A1), entre la bague d'étanchéité (3) et une contre-bague (5) fixée à l'élément de logement (2), qui débouche dans la chambre (A), et que la chambre annulaire (B2) est en communication avec la chambre d'air (B) par l'intermédiaire d'un interstice annulaire (7), le long de l'arbre (1),
**caractérisé en ce que**
la bague d'étanchéité (3) est dotée d'au moins un canal (9), qui, la traversant, relie la chambre (A) à l'espace annulaire (A1), et dans lequel se trouve une soupape compensatrice de pression (10), qui s'ouvre quand, dans la chambre (A) règne une surpression prédéterminée par rapport à la pression dans l'espace annulaire (A1).

2. Dispositif d'étanchéité selon la revendication 1, **caractérisé en ce que** la soupape compensatrice de pression (10) est un clapet de non retour, qui ouvre vers l'espace annulaire (A1).
